# FASCICULE DE BREVET EUROPEEN

(11) **EP 2 524 011 B1**
(45) Date de publication et mention de la délivrance du brevet: **14.11.2018**
(21) Numéro de dépôt: 11702515.5
(22) Date de dépôt: 11.01.2011
(51) Int. Cl.: D06M 23/08, D06P 1/00, D06P 1/44, C09B 69/10, D06M 23/12, C09C 3/10, C09D 7/40, C09C 1/36, C09B 67/00, C08K 5/00, C08K 5/07, C08K 5/3475, C08K 9/08, D06M 11/36, D06M 13/13, D06M 13/203, D06M 15/263, D06M 15/333, D06M 16/00, C09D 7/48

(54) **PROCEDE DE REVETEMENT AVEC DES DISPERSIONS D'ACTIFS ENROBES DANS UNE COUCHE POLYMERE**
VERFAHREN ZUR BESCHICHTUNG MIT DISPERSIONEN VON AKTIVEN, IN EINER POLYMERSCHICHT BESCHICHTETEN INHALTSSTOFFEN
METHOD FOR COATING WITH DISPERSIONS OF ACTIVE INGREDIENTS COATED IN A POLYMER LAYER

(30) Priorité: 11.01.2010 FR 1050134
(43) Date de publication de la demande: 21.11.2012
(73) Titulaire: Commissariat à l'Énergie Atomique et aux Énergies Alternatives, 75015 Paris (FR)
(72) Inventeur: PONCELET, Olivier, F-38000 Grenoble (FR); RENARD, Olivier, F-38120 Fontanil-cornillon (FR)
(74) Mandataire: Nony
(86) Numéro de dépôt international: PCT/IB2011/050115
(87) Numéro de publication internationale: WO 2011/083448

(56) Documents cités:
- WO-A1-2005/061602
- US-A1- 2002 039 593
- US-A1- 2007 149 654

## Description

La présente invention vise à proposer un procédé utile pour fonctionnaliser en surface des substrats avec un ou plusieurs actifs dédiés à leur procurer des propriétés particulières telles que des propriétés anti-UV, de fluorescence ou encore colorantes.

De nombreuses techniques de fonctionnalisation en surface de matériaux existent et sont employées dans des applications très diverses pour conférer des propriétés particulières à un matériau, voire le protéger.

Ces techniques sont généralement élaborées au regard d'une impossibilité soit à établir un lien direct entre l'actif et le substrat considéré, soit à garantir une pérennité de cette liaison dans le temps, lorsqu'elle est possible.

Une technique généralement considérée pour suppléer à un défaut d'interactivité d'un actif vis-à-vis d'un substrat consiste à fonctionnaliser l'actif considéré de manière à le doter d'un site fonctionnel apte à interagir avec une fonction présente sur le substrat. Toutefois, outre le fait que cette alternative est contraignante sur le plan de la mise en oeuvre, elle peut être malheureusement également préjudiciable au niveau de l'activité de l'actif. En effet, cette transformation structurelle de l'actif peut par ailleurs affecter ses propriétés physiques ou physicochimiques, dont il est précisément recherché à tirer profit au niveau du substrat.

Une autre alternative vise à formuler l'actif au sein d'un liant présentant lui une affinité avec le substrat de manière à y assurer son adhésion. Toutefois, ce liant peut à son tour être préjudiciable à la manifestation des propriétés de l'actif et par ailleurs ne permet généralement pas de fonctionnaliser le substrat avec un taux élevé en actif.

Pour des raisons évidentes, il serait souhaitable de disposer d'un mode de fonctionnalisation qui soit simple à mettre en oeuvre, qui ne requiert pas de transformation de la molécule d'actif et qui ne soit pas de nature à affecter l'activité de celui-ci.

Par ailleurs, parallèlement à ce problème de défaut d'interactivité d'un actif avec un substrat, existe celui posé par le caractère hydrophobe de certains actifs. Ce défaut de solubilité aqueuse rend nécessaire la mise en oeuvre de solvant(s) organique(s) qui, pour une raison évidente, ne sont pas en adéquation avec les contraintes environnementales et de sécurité.

Il serait donc également souhaitable de pouvoir s'affranchir de l'utilisation de tels solvants et donc de rendre compatible ces actifs avec une mise en oeuvre en milieu aqueux.

La présente invention vise précisément à répondre à l'ensemble des besoins précités.

Ainsi, l'invention vise à proposer un procédé utile pour fonctionnaliser en surface un substrat, généralement organique, avec au moins un actif caractérisé en ce qu'il met en contact ladite surface avec des nanoparticules spécifiques contenant ledit actif.

Plus précisément, l'invention concerne un procédé utile pour former un revêtement à base d'au moins un actif en surface d'un substrat, notamment organique, caractérisé en ce qu'il comprend au moins les étapes consistant à :
(1) disposer d'une dispersion aqueuse de nanoparticules ou d'un mélange de nanoparticules possédant un coeur formé en tout ou partie d'au moins un actif et enrobé d'une couche externe formée d'au moins un polymère hydrophile, ledit polymère hydrophile ayant un poids moléculaire supérieur à 10 000 g/ mol;
(2) mettre en contact ladite surface dudit substrat avec ladite dispersion aqueuse, et
(3) exposer ledit substrat obtenu à l'issue de l'étape précédente à des conditions propices à la formation, à la surface dudit substrat, d'un film polymérique formé desdites nanoparticules, l'étape (3) étant une étape de séchage;
lesdites nanoparticules de l'étape (1) étant préparées selon un procédé décrit dans la revendication 1. Les nanoparticules mises en oeuvre en étape (1) du procédé de l'invention possèdent un rapport pondéral actif(s)/polymère(s) hydrophile(s) variant de 0,2 à 0,4.

La mise en oeuvre d'un actif à l'état de nanoparticules telles que définies ci-dessus est particulièrement intéressante dans la mesure où elle permet d'accéder à un revêtement très dense et donc particulièrement enrichi en actif.

Ainsi, le revêtement formé peut posséder un taux de remplissage volumique supérieur à 70 %, voire à 74 %.

En particulier, le revêtement dudit substrat obtenu à l'issue du procédé selon l'invention peut posséder une densité en actifs au moins égale à 1 g par m² de revêtement.

Avantageusement, la dispersion aqueuse est dénuée de composés dits liants.

Au sens de l'invention, le terme « liant » désigne tout composé plus particulièrement mis en oeuvre au regard de son aptitude à contribuer à la formation d'un film. Il s'agit plus particulièrement de composés dits filmogènes à l'image par exemple des polyacryliques, le polyacétate de vinyle (PVA), les polyuréthanes ou tout type de revêtements obtenus par des procédés sol gel, comme par exemple SiO₂, ZiO₂, TiO₂ ou Al₂O₃.

L'invention repose plus particulièrement sur l'observation inattendue par les inventeurs que le fait de mettre en oeuvre un actif à l'état de nanoparticules conformes à la présente invention, permet d'accéder à une fonctionnalisation de surface optimisée.

Au regard de leur forme homogène, ces nanoparticules peuvent être déposées de manière contiguë les unes par rapport aux autres et former ainsi un réseau dense et ordonné sur la surface à fonctionnaliser.

Le revêtement ainsi formé n'est réalisable ni avec l'actif à l'état pur, ni avec une composition de type liant dans laquelle seraient dispersées lesdites nanoparticules.

En effet, dans cette seconde variante, l'organisation des nanoparticules au sein du film formé par le liant contenant les nanoparticules demeure totalement aléatoire. Il est donc impossible dans ce cas d'obtenir une organisation optimale de nanoparticules, et le taux de charges volumique du revêtement correspondant est moindre que celui accessible selon l'invention.

L'étape (3) du procédé selon l'invention est une étape de séchage.

Selon une variante de réalisation, l'ensemble des étapes (2) et (3) peut être renouvelé au moins une fois à l'issue de l'étape (3).

Selon cette variante, la couche du film polymérique formé desdites nanoparticules est de nouveau mise en contact avec une dispersion aqueuse desdites nanoparticules de la composition telle que définie en étape (1) et la couche ainsi formée subit une étape (3) consécutive.

Le film de nanoparticules formé dans le cadre de la présente invention est avantageux à plusieurs titres.

Tout d'abord, la présence de polymère(s) à la surface des particules permet d'optimiser leur compatibilité avec le matériau à traiter, mais aussi celle entre les particules elles-mêmes par interpénétration des chaînes de polymères entre elles. Grâce à l'ensemble de ces éléments, on obtient un revêtement particulièrement compact et fixé au matériau sans usage de liant.

Le revêtement obtenu selon l'invention est en outre doté de bonnes propriétés d'adhésion à l'égard du substrat sur lequel il est déposé et d'une bonne tenue mécanique.

L'agencement des nanoparticules formant le revêtement est tel qu'il permet de plus de déposer plus d'actif par unité de surface comparativement à un simple dépôt d'actif et donc permet de tirer profit de manière optimale des propriétés dudit actif. Cette optimisation n'est aucunement atteinte lors de la mise en oeuvre des particules non fonctionnalisées en association au moins avec un liant dédié à leur fixation sur leur substrat.

Par ailleurs, la mise en oeuvre des actifs à l'état de nanoparticules permet d'accéder à une architecture de dépôt intéressante et notamment particulièrement avantageuse lorsque l'on cherche à faire un revêtement d'actif en surface d'un substrat fibreux tissé ou non.

Ainsi, au regard de leur taille, les nanoparticules, contenant par exemple un actif absorbeur d'UV, demeurent en surface des fibres à la différence de l'actif non formulé à l'état de nanoparticules qui, au regard de sa plus petite taille, a tendance à pénétrer dans les fibres au préjudice de son effet absorbeur d'UV. En conséquence, à quantité égale d'actif, l'invention permet d'optimiser significativement l'effet anti-absorbeur recherché en surface du substrat fibreux.

Comme précisé ci-dessus, le procédé selon l'invention est tout particulièrement intéressant pour la fonctionnalisation de surface avec un absorbeur d'UV et le revêtement ainsi formé possède alors des propriétés d'absorbance des ultraviolets.

Le procédé selon l'invention est particulièrement avantageux à l'égard des absorbeurs d'UV organiques.

Ces derniers présentent en effet de bonnes propriétés d'absorbance UV et de stabilité. Toutefois, la plupart de ce type de composés chimiques organiques possède un caractère fortement hydrophobe qui rend difficile, voire impossible leur mise en oeuvre dans des formulations aqueuses. Pour pallier à ce défaut de solubilité en milieu aqueux, il est donc nécessaire soit de les mettre en oeuvre en milieu solvant organique, soit de procéder à leur modification chimique pour leur conférer la solubilité requise en milieu aqueux. En outre, dans tous les cas, leur taux de charge en surface d'un support demeure limité et ne dépasse généralement pas 0,03 mg/m² en actif.

En conséquence, le procédé selon l'invention permet avantageusement de suppléer à l'ensemble des déficiences soulevées ci-dessus.

### NANOPARTICULES

Les nanoparticules considérées selon l'invention pour leur aptitude à former un revêtement en surface d'un substrat, peuvent posséder avantageusement une même taille, voire des tailles différentes mais alors contrôlées, et une dispersibilité adéquate pour les rendre compatibles par exemple avec une application par pulvérisation selon des méthodes conventionnelles.

Dans la variante de réalisation où deux tailles différentes sont considérées, la population qui possède la granulométrie la plus faible permet, en comblant les vides laissés entre les nanoparticules de la population de plus grande granulométrie, d'augmenter fortement le taux de remplissage volumique.

Ainsi, les nanoparticules utilisées dans le procédé selon l'invention peuvent avantageusement posséder une taille moyenne inférieure à 500 nm, de préférence inférieure à 300 nm, de préférence encore inférieure à 200 nm.

Plus particulièrement, leur taille varie de 300 nm à 10 nm et notamment de 100 nm à 20 nm.

Cette taille peut être déterminée par Diffusion Dynamique de la Lumière, la taille du coeur inorganique pouvant elle-même être déterminée au MGT haute résolution.

Comme précisé précédemment, les nanoparticules sont formées d'une couche externe polymérique et hydrophile et d'un coeur formé en tout ou partie d'au moins un actif.

Elles peuvent être monodisperses ou non.

Pour accéder à un revêtement possédant un taux de remplissage volumique particulièrement important, voire supérieur à 74 %, il peut être intéressant de mettre en oeuvre deux populations de taille de nanoparticules pour obtenir un revêtement beaucoup plus compact.

### Couche externe polymérique

Cette couche externe est de nature polymérique et avantageusement non réticulée.

En ce qui concerne le ou les polymère(s) formant cette couche, il s'agit de polymère(s) à fort caractère hydrophile ayant une longueur de chaîne moléculaire suffisamment longue pour présenter une affinité avec le coeur organique.

Un polymère hydrophile convenant à l'invention possèdent un poids moléculaire supérieur à 10 000 g/mole, notamment supérieur à 20 000 g/mole, et plus particulièrement variant de 25 000 à 600 000 g/mole.

Ce polymère hydrophile peut par exemple être choisi parmi : les alcools polyvinyliques, le dextran, l'alginate de sodium, l'acide polyaspartique, le polyéthylène glycol, le polyoxyde d'éthylène, le polyvinylpyrrolidone, l'acide polyacrylique et ses sels, le polyacrylamide, le N-isopropyle polyacrylamide, le polyacrylate d'hydroxyéthyle, le polystyrène sulfonate de sodium, l'acide poly2-acrylamido-2-méthyle-1-propanesulfonique, les polysaccharides, les dérivés de cellulose, les copolymères des polymères précités et leurs mélanges.

D'autres polymères hydrosolubles, des copolymères, ou les dérivés de tels matériels seront apparents à l'homme de l'art.

Plus particulièrement, le polymère hydrophile est un alcool polyvinylique ou un acide polyacrylique.

Les alcools polyvinyliques utilisés possèdent un poids moléculaire supérieur à 10 000 g/mole, notamment supérieur à 20 000 g/mole, et plus particulièrement variant de 25 000 à 500 000 g/mole.

Pour leur part, les acides polyacryliques possèdent avantageusement un poids moléculaire de 10 000 à 600 000, plus particulièrement compris entre 100 000 et 600 000 et notamment de l'ordre de 450 000 g/mole.

Selon une variante de réalisation avantageuse, les nanoparticules possèdent une couche externe formée en tout ou partie d'au moins un alcool polyvinylique de poids moléculaire variant de 25 000 à 100 000 g/mole, et plus particulièrement de 25 000 à 50 000 g/mole.

L'épaisseur de la couche externe polymérique peut varier de 245 à 10 nm.

Le diamètre des particules peut quant à lui varier de 100 à 600 % de la taille du coeur.

### Actif

L'actif contenu dans les nanoparticules utilisées selon l'invention peut être de nature très diverse.

Il peut par exemple être choisi parmi au moins l'une des familles d'actifs suivants : les composés organiques absorbeurs d'UV, les filtres UV inorganiques tels que TiO₂, ZnO, ou encore CeO₂, les agents fluorescents, les agents de colorations organiques ou inorganiques, les composés organiques absorbeurs d'infrarouges, les agents azurants, les bactéricides, les virucides, les additifs tels que les antioxydants ou les désactiveurs de radicaux libres, les stabilisants.

Comme précisé ci-dessous, le procédé selon l'invention est tout particulièrement intéressant pour le dépôt, en surface d'un support, d'absorbeur(s) d'UV. Ces absorbeurs d'UV peuvent être plus particulièrement des absorbeurs d'UV organiques, et être notamment choisis parmi les benzotriazoles substitués, les hydroxybenzophénones, ou le pyrène et ses dérivés.

Pour des raisons évidentes, les nanoparticules selon l'invention peuvent être mises en oeuvre à des fins de fonctionnalisation d'autres actifs que ceux identifiés précédemment.

Par ailleurs, le coeur des nanoparticules peut contenir un ou plusieurs actifs différents.

De même, la dispersion aqueuse peut contenir des nanoparticules distinctes, c'est-à-dire pouvant se différencier les unes par rapport aux autres par la nature de l'actif qu'elles contiennent et/ou la nature du polymère formant leur couche externe.

Dans les nanoparticules conformes à l'invention, lesdits actif(s) et polymère(s) hydrophile(s) sont associés dans un rapport pondéral actif(s)/polymère(s) hydrophile(s) variant de 0,2 à 0,4, en particulier de l'ordre de 0,3.

Ces nanoparticules sont préparées selon un procédé comprenant au moins les étapes consistant à :
- disposer d'une phase organique telle que la méthyle éthyl cétone ou le cyclohexane contenant ledit actif à l'état de soluté,
- disposer d'une phase aqueuse contenant au moins un polymère hydrophile,
- ajouter la phase organique à la phase aqueuse dans des conditions propices à la formation d'une émulsion de type phase organique dans phase aqueuse et en présence d'au moins un tensioactif apte à stabiliser ladite émulsion,
- réaliser une trempe thermique de l'émulsion ainsi obtenue pour former lesdites nanoparticules, et
- isoler lesdites nanoparticules.

Les nanoparticules peuvent notamment être isolées du milieu les contenant par lyophilisation de celui-ci.

La phase organique peut comprendre de 5 à 20 % en poids d'actif(s), par rapport à son poids total.

La phase aqueuse peut comprendre de l'eau et/ou au moins un solvant hydrosoluble tel que par exemple les monoalcools inférieurs ayant de 1 à 5 atomes de carbone tels que l'éthanol et l'isopropanol, les glycols ayant de 2 à 8 atomes de carbone tels que l'éthylène glycol, le propylène glycol, le 1,3-butylène glycol et le dipropylène glycol, les cétones en C₃-C₄ et les aldéhydes en C₂-C₄.

Le polymère hydrophile peut être formulé à une concentration variant de 2 à 10 % en poids, voire de 3 à 8 % en poids par rapport au poids de la phase organique considérée.

Comme précisé précédemment, le polymère ou mélange de polymères et le ou les actif(s) sont mis en présence dans des quantités en polymère(s) et actif(s) ajustées pour que les nanoparticules possèdent un rapport pondéral actif(s)/polymère(s) hydrophile(s) variant de 0,2 à 0,4.

Bien entendu, l'homme du métier est à même d'opérer les ajustements nécessaires des concentrations en polymères hydrophiles et en composés organiques pour obtenir des nanoparticules possédant un rapport pondéral actif(s)/polymère(s) hydrophile(s) variant de 0,2 à 0,4.

### PROCEDE

Le procédé selon l'invention implique de mettre en contact la surface du substrat à traiter avec une dispersion aqueuse de nanoparticules.

Une dispersion aqueuse de nanoparticules selon l'invention peut être formée par dispersion dans une phase aqueuse, d'une poudre constituée de nanoparticules, en particulier telle qu'obtenue à l'issue du procédé de préparation décrit précédemment.

De manière avantageuse, la poudre est aisément dispersable en milieu aqueux.

La quantité de nanoparticules au sein de cette dispersion est généralement ajustée au regard de la surface à traiter. Son appréciation relève clairement des compétences de l'homme de l'art.

Avantageusement, la dispersion aqueuse peut posséder au moins 0,01 % en poids, et en particulier de 1 % à 30 % en poids de nanoparticules.

Ces nanoparticules sont maintenues en suspension dans une phase aqueuse. Cette phase aqueuse peut être telle que définie précédemment.

Avantageusement, la phase aqueuse est dénuée de liant organique.

En revanche, cette phase aqueuse dédiée au dépôt de nanoparticules sur la surface à traiter peut, bien entendu, contenir d'autres additifs destinés soit à améliorer ses qualités au moment de la pulvérisation et/ou l'application, soit à conférer au revêtement correspondant des propriétés annexes.

Il peut par exemple s'agir d'agents dispersants de type polycarbonate, par exemple l'acide carboxylique ou l'acide stéarique.

L'application de la dispersion aqueuse sur le substrat peut être effectuée par tout mode d'application conventionnel propice au dépôt d'une solution sur une surface solide, tel que par exemple application au pinceau, impression (jet d'encre, offset), couchage/enduction, spin-coating, pulvérisation ou encore immersion directe des substrats dont on cherche à traiter la surface dans la dispersion aqueuse.

Ces techniques d'application relèvent clairement des compétences de l'homme de l'art et ne sont pas décrites ici de manière détaillée.

Le procédé selon l'invention comprend en outre une étape de formation d'un film polymérique se présentant sous la forme d'un revêtement de nanoparticules, par séchage de la surface revêtue de la dispersion aqueuse via notamment l'élimination des solvants formant la phase aqueuse.

Cette élimination des solvants peut s'effectuer spontanément à température ambiante, par exemple par simple séchage ou égouttage à température ambiante, ou être stimulée par un traitement thermique, par exemple par une fixation à la vapeur d'eau.

Le séchage peut également être dû à une association à des réactifs ou à une réticulation des polymères.

Ce traitement thermique peut être réalisé par un chauffage externe du substrat. Toutes méthodes de chauffage sont envisageables telles que par exemple celles consistant à chauffer directement le substrat, ou encore celles impliquant l'exposition du substrat dans un four à circulation d'air chaud ou un four sous vide.

D'une manière générale, la température d'un tel traitement n'excédera pas 150 °C.

Plus particulièrement, l'étape de formation du film polymérique formé desdites nanoparticules peut être réalisée à une température variant de 15 °C à 150 °C, et plus particulièrement de 20 °C à 100 °C.

Comme précisé précédemment, il est possible, à l'issue de ce séchage, de procéder à une nouvelle application d'une couche de la dispersion aqueuse de nanoparticules sur une première couche de nanoparticules.

La présente invention a également pour objet les matériaux revêtus d'un film formé par le procédé tel que décrit précédemment.

Les nanoparticules considérées selon l'invention peuvent être mises en oeuvre dans le cadre de la fonctionnalisation de surface d'une grande diversité de matériaux.

Il peut s'agir de matériaux organiques, notamment de nature polymérique, ou inorganiques tels que les métaux, les céramiques ou les verres.

Ainsi, dans le domaine des matériaux polymères, il peut notamment s'agir de matériaux de type élastomères, adhésifs, peintures, ou autres types de revêtements.

La présente invention a également pour objet un procédé de fonctionnalisation et notamment de stabilisation photochimique de matériaux fibreux non colorés, colorés ou imprimés, comprenant par exemple la soie, le cuir, la laine, les polyamides, les polyesters, ou les polyuréthanes, et plus particulièrement les matériaux fibreux contenant de la cellulose tels que le coton, le lin, la jute, ainsi que les fibres viscoses et la cellulose régénérée.

Le matériau textile à protéger peut être un matériau textile teint, en particulier un matériau textile teint avec des colorants dispersés dans une solution aqueuse.

Il peut également s'agir d'un matériau cellulosique à l'image du papier ou du carton.

L'invention va maintenant être décrite au moyen des exemples et des figures suivants donnés bien entendu à titre illustratif et non limitatif de l'invention.

### EXEMPLE 1

Une solution S1 est préparée à partir de 6 ml d'une solution aqueuse d'alcool polyvinylique (Mw 31000-50000) (MOWIOL®) à 4 % massique et 0,3 g de dodécyl sulfate de sodium.

Une solution S2 d'un colorant fluorescent (coumarine) est préparée en prélevant 22,4 ml de surnageant après dissolution de 1,29 g du colorant dans 80 ml de methyl éthyl cétone sous agitation.

On ajoute au goutte à goutte et à température ambiante la solution S2 à la solution S1 sous forte agitation par utilisation d'un agitateur mécanique avec mobile d'agitation. L'agitation est maintenue pendant 2 heures pour que l'émulsion s'homogénéise.

L'émulsion S3 est ensuite introduite au goutte à goutte dans de l'azote liquide pour figer les gouttelettes à l'état de nanoparticules. L'ensemble est ensuite filtré et lyophilisé à l'aide d'un lyophilisateur ou d'un schlenck maintenu sous vide dynamique par une pompe à palette et muni d'un piège froid pendant 24 heures.

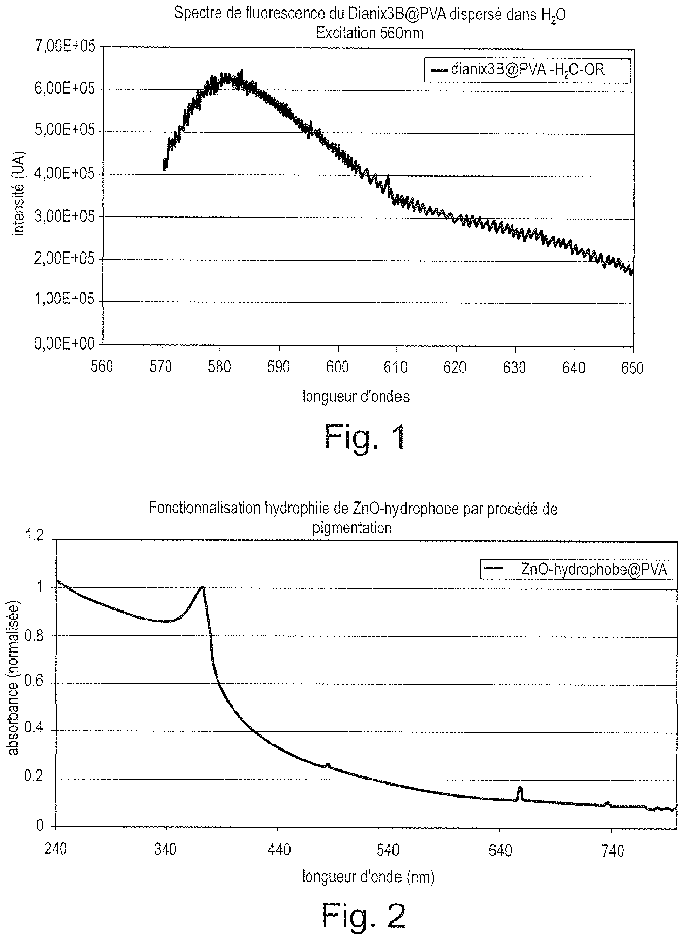

La poudre fluorescente ainsi obtenue se redisperse aisément dans l'eau et, comme illustré en figure 1, présente le spectre d'absorption caractéristique du colorant de départ.

La solution ainsi obtenue est appliquée, par exemple, sur un substrat textile, par trempage de ce substrat dans ladite solution puis essorage.

### EXEMPLE 2

Des nanoparticules sont préparées selon le mode opératoire décrit en exemple 1 mais en utilisant à titre de solution S1, une solution S1', préparée à partir de 6 ml d'une solution aqueuse d'alcool polyvinylique (Mw 31000-50000) (MOWIOL®) à 5 % massique et 0,3 de sodium dodécyl sulfate de sodium, et à titre de solution S2, une solution S2', préparée par dissolution de 0,5 g d'oxyde de zinc (ZnO) (Z805 de chez VP ADNANO®) dans 90 ml de Methyl Ethyl cétone sous agitation.

La poudre ainsi obtenue se redisperse aisément dans l'eau et, comme illustré en figure 2, présente un spectre d'absorption caractéristique de l'oxyde de zinc de départ.

La solution ainsi obtenue est appliquée de la même façon que dans l'exemple 1.

### EXEMPLE 3

Des nanoparticules sont préparées selon le mode opératoire décrit en exemple 1 mais en utilisant à titre de solution S2, une solution S2", préparée par dissolution de 0,46 g d'acide pyrène carboxylique-1 dans 70 ml de Methyl Ethyl cétone sous agitation et chauffage modéré, c'est-à-dire une température inférieure à 30 °C, voire à température ambiante.

La poudre ainsi obtenue se redisperse aisément dans l'eau et présente un spectre d'absorption caractéristique de la molécule de départ.

Un échantillon de tissu (ECH1) est imprégné selon la technique de foulardage par une solution aqueuse de nanoparticules d'acide pyrène carboxylique-1 concentrée à 6,82 mg/ml en molécule active obtenu selon le procédé décrit ci-dessus.

Un autre échantillon de tissu (ECH2) dit de référence est traité parallèlement par une solution aqueuse d'acide pyrène carboxylique-1 concentrée à 6,82 mg/ml en milieu basique.

Les deux échantillons obtenus sont pratiquement blancs (couleur originelle du tissu).

ECH1 et ECH2 sont soumis à un test de vieillissement dans une enceinte SUNTEST de la société ATLAS.

Les conditions de vieillissement sont les suivantes : irradiance à 550 W/m², lampe à arc xénon équipée d'un filtre dit « verre à vitre » coupant les UV en dessous de 310 nm, durée d'exposition 72 h.

A l'issu de ce test de vieillissement, ECH1 a très légèrement jauni, alors que ECH2 est devenu marron (couleur caractéristique de la dégradation de l'acide pyrène carboxylique-1).

Le traitement de la présente invention permet manifestement d'améliorer la tenue à la lumière de molécules sensibles.

## Revendications

1. Procédé utile pour former un revêtement à base d'au moins un actif en surface d'un substrat, notamment organique, **caractérisé en ce qu'**il comprend au moins les étapes consistant à :
(1) disposer d'une dispersion aqueuse de nanoparticules ou d'un mélange de nanoparticules possédant un coeur formé en tout ou partie d'au moins un actif et enrobé d'une couche externe formée d'au moins un polymère hydrophile, lesdits actif(s) et polymère(s) hydrophile(s) étant associés dans un rapport pondéral actif(s)/polymère(s) hydrophile(s) variant de 0,2 à 0,4, ledit polymère hydrophile ayant un poids moléculaire supérieur à 10 000 g/mol ;
(2) mettre en contact ladite surface dudit substrat avec ladite dispersion aqueuse, et
(3) exposer ledit substrat obtenu à l'issue de l'étape précédente à des conditions propices à la formation, à la surface dudit substrat, d'un film polymérique formé desdites nanoparticules, l'étape (3) étant une étape de séchage ;
lesdites nanoparticules de l'étape (1) étant préparées selon un procédé comprenant au moins les étapes consistant à :
- disposer d'une phase organique telle que la méthyle éthyl cétone ou le cyclohexane contenant ledit actif à l'état de soluté,
- disposer d'une phase aqueuse contenant au moins un polymère hydrophile,
- ajouter la phase organique à la phase aqueuse dans des conditions propices à la formation d'une émulsion de type phase organique dans phase aqueuse et en présence d'au moins un tensioactif apte à stabiliser ladite émulsion,
- réaliser une trempe thermique de l'émulsion ainsi obtenue pour former lesdites nanoparticules, et
- isoler lesdites nanoparticules.

2. Procédé selon la revendication 1, dans lequel l'ensemble des étapes (2) et (3) est renouvelé au moins une fois à l'issue de l'étape (3).

3. Procédé selon l'une quelconque des revendications précédentes dans lequel le polymère hydrophile possède un poids moléculaire supérieur à 20 000 g/mole, et plus particulièrement variant de 25 000 à 600 000 g/mole.

4. Procédé selon l'une quelconque des revendications précédentes, dans lequel le polymère hydrophile est choisi parmi les alcools polyvinyliques, le dextran, l'alginate de sodium, l'acide polyaspartique, le polyéthylène glycol, le polyoxyde d'éthylène, le polyvinylpyrrolidone, l'acide polyacrylique et ses sels, le polyacrylamide, le N-isopropyle polyacrylamide, le polyacrylate d'hydroxyéthyle, le polystyrène sulfonate de sodium, l'acide poly2-acrylamido-2-méthyle-1-propanesulfonique, les polysaccharides, les dérivés de cellulose, les copolymères des polymères précités et leurs mélanges.

5. Procédé selon l'une quelconque des revendications précédentes, dans lequel le polymère hydrophile est un alcool polyvinylique ou un acide polyacrylique.

6. Procédé selon la revendication 4 ou 5, dans lequel ledit acide polyacrylique possède un poids moléculaire allant de 10 000 à 600 000, plus particulièrement compris entre 100 000 et 600 000 et notamment de l'ordre de 450 000 g/mole.

7. Procédé selon l'une quelconque des revendications précédentes, dans lequel les nanoparticules possèdent une couche externe formée en tout ou partie d'au moins un alcool polyvinylique de poids moléculaire supérieur à 10 000 g/mole, notamment supérieur à 20 000 g/mole, et plus particulièrement variant de 25 000 à 50 000 g/mole.

8. Procédé selon l'une quelconque des revendications précédentes, dans lequel les nanoparticules possèdent une taille moyenne, déterminée par diffusion dynamique de la lumière, inférieure à 500 nm, de préférence inférieure à 300 nm, de préférence encore inférieure à 200 nm.

9. Procédé selon l'une quelconque des revendications précédentes, dans lequel ledit actif est choisi parmi les composés organiques absorbeurs d'ultraviolets et/ou d'infrarouges, les filtres UV inorganiques, les agents fluorescents, les agents de coloration organiques ou inorganiques, les agents azurants, les bactéricides, les virucides, les antioxydants, les désactivateurs de radicaux libres ou les stabilisants.

10. Procédé selon la revendication précédente, dans lequel ledit composé organique absorbeur d'UV est choisi parmi les benzotriazoles substitués, les hydroxybenzophénones, le pyrène et ses dérivés.

11. Procédé selon l'une quelconque des revendications précédentes, dans lequel l'étape (3) est réalisée à une température variant de 15 °C à 150 °C, et plus particulièrement de 20 °C à 100°C.

12. Procédé selon l'une quelconque des revendications précédentes, dans lequel le substrat est formé d'au moins un matériau polymérique.

13. Procédé selon l'une quelconque des revendications précédentes, dans lequel le substrat est un textile.

14. Matériau dont au moins une partie de la surface est fonctionnalisée selon le procédé défini dans l'une quelconque des revendications précédentes.

## Patentansprüche

1. Verfahren zur Herstellung einer, insbesondere organischen, Beschichtung auf der Basis mindestens eines Wirkstoffs auf der Oberfläche eines Substrats, **dadurch gekennzeichnet, dass** es mindestens die folgenden Schritte umfasst:
(1) Erhalten einer wässrigen Dispersion von Nanopartikeln oder eines Gemischs von Nanopartikeln, die einen Kern besitzen, der insgesamt oder zum Teil von mindestens einem Wirkstoff gebildet wird und mit einer äußeren Schicht umhüllt ist, die von mindestens einem hydrophilen Polymer gebildet wird, wobei der/die Wirkstoff(e) und das/die hydrophile(n) Polymer(e) in einem Gewichtsverhältnis von Wirkstoff(en)/hydrophilem Polymer bzw. hydrophilen Polymeren von 0,2 bis 0,4 vereinigt sind, wobei das hydrophile Polymer ein Molekulargewicht von mehr als 10000 g/mol besitzt,
(2) Inkontaktbringen der Oberfläche des Substrats mit der wässrigen Dispersion und
(3) Aussetzen des nach Abschluss des vorhergehenden Schritts erhaltenen Substrats gegenüber Bedingungen, die die Bildung eines aus den Nanopartikeln gebildeten Polymerfilms auf der Oberfläche des Substrats begünstigen, wobei Schritt (3) ein Trocknungsschritt ist,
wobei die Nanopartikel des Schritts (1) gemäß einem Verfahren hergestellt werden, das mindestens die folgenden Schritte umfasst:
- Erhalten einer organischen Phase, wie Methylethylketon oder Cyclohexan, die den Wirkstoff im gelösten Zustand umfasst,
- Erhalten einer wässrigen Phase, die mindestens ein hydrophiles Polymer umfasst,
- Zugeben der organischen Phase zu der wässrigen Phase unter Bedingungen, die die Bildung einer Emulsion des Typs organische Phase in wässriger Phase begünstigen, und in Gegenwart mindestens eines Tensids, das die Emulsion stabilisieren kann,
- Durchführen von thermischer Härtung der so erhaltenen Emulsion, um die Nanopartikel herzustellen, und
- Isolieren der Nanopartikel.

2. Verfahren nach Anspruch 1, wobei die gesamten Schritte (2) und (3) nach Abschluss von Schritt (3) mindestens einmal wiederholt werden.

3. Verfahren nach einem der vorhergehenden Ansprüche, wobei das hydrophile Polymer ein Molekulargewicht von mehr als 20000 g/mol und insbesondere im Bereich von 25000 bis 600000 g/mol aufweist.

4. Verfahren nach einem der vorhergehenden Ansprüche, wobei das hydrophile Polymer aus Polyvinylalkoholen, Dextran, Natriumalginat, Polyasparaginsäure, Polyethylenglykol, Polyethylenoxid, Polyvinylpyrrolidon, Polyacrylsäure und deren Salzen, Polyacrylamid, Poly(N-isopropylacrylamid), Poly(hydroxyethylacrylat), Poly(natriumstyrolsulfonat), Poly(2-acrylamido-2-methyl-1-propansulfonsäure), Polysacchariden, Cellulosederivaten, Copolymeren der vorstehend genannten Polymere und deren Gemischen ausgewählt ist.

5. Verfahren nach einem der vorhergehenden Ansprüche, wobei das hydrophile Polymer ein Polyvinylalkohol oder eine Polyacrylsäure ist.

6. Verfahren nach Anspruch 4 oder 5, wobei die Polyacrylsäure ein Molekulargewicht von 10000 bis 600000, insbesondere zwischen 100000 und 600000 und insbesondere in der Größenordnung von 450000 g/mol aufweist.

7. Verfahren nach einem der vorhergehenden Ansprüche, wobei die Nanopartikel eine äußere Schicht besitzen, die insgesamt oder zum Teil von mindestens einem Polyvinylalkohol mit einem Molekulargewicht von mehr als 10000 g/mol, insbesondere mehr als 20000 g/mol und ganz besonders im Bereich von 25000 bis 50000 g/mol gebildet wird.

8. Verfahren nach einem der vorhergehenden Ansprüche, wobei die Nanopartikel eine mittels dynamischer Lichtstreuung bestimmte mittlere Größe von weniger als 500 nm, vorzugsweise weniger als 300 nm, noch stärker bevorzugt weniger als 200 nm aufweisen.

9. Verfahren nach einem der vorhergehenden Ansprüche, wobei der Wirkstoff aus Ultraviolett- und/oder Infrarot-absorbierenden organischen Verbindungen, anorganischen UV-Filtern, fluoreszierenden Mitteln, organischen oder anorganischen Färbemitteln, optischen Aufhellern, Bakteriziden, Viruziden, Antioxidantien, Desaktivatoren von freien Radikalen oder Stabilisierungsmitteln ausgewählt ist.

10. Verfahren nach dem vorhergehenden Anspruch, wobei die organische UV-absorbierende Verbindung aus substituierten Benzotriazolen, Hydroxybenzophenonen, Pyren und dessen Derivaten ausgewählt ist.

11. Verfahren nach einem der vorhergehenden Ansprüche, wobei Schritt (3) bei einer Temperatur im Bereich von 15°C bis 150°C und insbesondere von 20°C bis 100°C durchgeführt wird.

12. Verfahren nach einem der vorhergehenden Ansprüche, wobei das Substrat von mindestens einem Polymermaterial gebildet wird.

13. Verfahren nach einem der vorhergehenden Ansprüche, wobei das Substrat ein Textil ist.

14. Material, bei dem mindestens ein Teil der Oberfläche gemäß dem Verfahren nach einem der vorhergehenden Ansprüche funktionalisiert ist.

## Claims

1. Process useful for forming a coating based on at least one active ingredient at the surface of a substrate, in particular an organic substrate, **characterized in that** it comprises at least the stages consisting in:
(1) having available an aqueous dispersion of nanoparticles or of a mixture of nanoparticles having a core formed in all or part of at least one active ingredient and coated with an outer layer formed of at least one hydrophilic polymer, said active ingredient(s) and hydrophilic polymer(s) being combined in an active ingredient(s)/hydrophilic polymer(s) ratio by weight varying from 0.2 to 0.4, said hydrophilic polymer having a molecular weight of greater than 10 000 g/mol,
(2) bringing said surface of said substrate into contact with said aqueous dispersion, and
(3) exposing said substrate obtained on conclusion of the preceding stage to conditions propitious to the formation, at the surface of said substrate, of a polymeric film formed of said nanoparticles, stage (3) being a drying stage, said nanoparticles of stage (1) being prepared according to a process comprising at least the stages consisting in:
- having available an organic phase, such as methylethylketone or cyclohexane, comprising said active ingredient in the dissolved state,
- having available an aqueous phase comprising at least one hydrophilic polymer,
- adding the organic phase to the aqueous phase under conditions propitious to the formation of an emulsion of the type consisting of an organic phase in an aqueous phase and in the presence of at least one surfactant capable of stabilizing said emulsion,
- carrying out a thermal quenching of the emulsion thus obtained in order to form said nanoparticles, and
- isolating said nanoparticles.

2. Process according to Claim 1, in which the combined stages (2) and (3) are repeated at least once on conclusion of stage (3).

3. Process according to either one of the preceding claims, in which the hydrophilic polymer has a molecular weight of greater than 20 000 g/mol and more particularly varying from 25 000 to 600 000 g/mol.

4. Process according to any one of the preceding claims, in which the hydrophilic polymer is chosen from polyvinyl alcohols, dextran, sodium alginate, polyaspartic acid, polyethylene glycol, polyethylene oxide, polyvinylpyrrolidone, polyacrylic acid and its salts, polyacrylamide, poly(N-isopropylacrylamide), poly (hydroxyethyl acrylate), poly(sodium styrenesulfonate), poly (2-acrylamido-2-methyl-1-propylenesulfonic acid), polysaccharides, cellulose derivatives, copolymers of the abovementioned polymers and their blends.

5. Process according to any one of the preceding claims, in which the hydrophilic polymer is a polyvinyl alcohol or a polyacrylic acid.

6. Process according to Claim 4 or 5, in which said polyacrylic acid has a molecular weight ranging from 10 000 to 600 000, more particularly of between 100 000 and 600 000 and in particular of the order of 450 000 g/mol.

7. Process according to any one of the preceding claims, in which the nanoparticles have an outer layer formed in all or part of at least one polyvinyl alcohol with a molecular weight of greater than 10 000 g/mol, in particular of greater than 20 000 g/mol and more particularly varying from 25 000 to 50 000 g/mol.

8. Process according to any one of the preceding claims, in which the nanoparticles have a mean size, determined by dynamic light scattering, of less than 500 nm, preferably of less than 300 nm, more preferably of less than 200 nm.

9. Process according to any one of the preceding claims, in which said active ingredient is chosen from organic ultraviolet- and/or infrared-absorbing compounds, inorganic UV screening agents, fluorescent agents, organic or inorganic coloring agents, optical brighteners, bactericides, virucides, antioxidants, free radical deactivators or stabilizers.

10. Process according to the preceding claim, in which said organic UV-absorbing compound is chosen from substituted benzotriazoles, hydroxybenzophenones, or pyrene and its derivatives.

11. Process according to any one of the preceding claims, in which stage (3) is carried out at a temperature varying from 15°C to 150°C and more particularly from 20°C to 100°C.

12. Process according to any one of the preceding claims, in which the substrate is formed of at least one polymeric material.

13. Process according to any one of the preceding claims, in which the substrate is a textile.

14. Material, at least a portion of the surface of which is functionalized according to the process defined in any one of the preceding claims.
